# EUROPEAN PATENT APPLICATION

(11) **EP 0 755 896 A2**
(43) Date of publication of application: **29.01.1997**
(21) Application number: 96500108.4
(22) Date of filing: 25.07.1996
(51) Int. Cl.: B66F 11/04

(54) **Cinema and video camera crane**

(30) Priority: 27.07.1995 ES 9501518
(71) Applicant: VALERO VISION, S.A., 28033 Madrid (ES)
(72) Inventor: Gomez Cabello, Juan Manuel, 28033 Madrid (ES)
(74) Representative: Roeb Ungeheuer, Carlos

(57) **Abstract**

On a dolly (1) a column (6) is mounted having a height according to the maximum positional height foreseen for the operator, on which column are fitted two lateral guides for respective movable carriages (8-8') related to each other through a transmission element such as a cable, in a manner that when one carriage goes up the other comes down, and vice versa, onto one of these carriages (8) being secured the operator's seat (10) and camera support (11), while on the other a compensating counterweight (12) is secured, in such a way that camera height changes are achieved by means of vertical movement over said column (6), and panoramic sweeping is achieved by rotating said column in a planetary motion over a bolt (4) centered over dolly (1).

## Description

### OBJECT OF THE INVENTION

This invention relates to a crane which has been specially conceived to allow vertical up-and-down and rotational movements of a camera and its corresponding operator for cinema or video filming.

The object of the invention is to achieve smooth and progressive operation in both vertical and horizontal directions, providing optimal stability conditions with a minimum volumetric or space requirement for manoeuvering.

### BACKGROUND OF THE INVENTION

Under normal working conditions, a camera operator is known to require a crane allowing him combined elevation and rotational movements designed to perform 360° panoramic sweeps at various height levels.

This mobility must furthermore be complemented with the ability to provide longitudinal movement, both in a straight line and along any other trajectory, for which the crane is normally installed on a dolly which moves along fixed preestablished guides or simply by rolling on the floor, being steered by any adequate means.

Standard cranes for implementing these functions are built around a base which, depending on the specific application, may be either fixed or mobile, that is to say, fixed or capable of rolling on rails or directly on the floor, said base having a column mounted on it that rotates around itself or allows a boom to rotate which, being provided with an substantially transversal disposition, receives an operator on one end, the other end being fitted with a compensating counterweight.

These cranes pose a fundamental problem in that, in order to achieve adequate operational efficiency, the boom is provided with a length of approximately 3 meters, which means that in a 360° rotation it performs a sweep having approximately 6 meters in diameter, within which space obviously no person or object may be located in view that their presence would impair the boom's motion, this circular plan surface being made extensive in height to the maximum level foreseen for the boom.

Therefore, the main problem with the cranes currently used in the film and video industry lies in their dimensions being excessively large, in addition to the amount of dead space required around them.

### DESCRIPTION OF THE INVENTION

The crane proposed by the invention has been conceived and structured to solve the above problems in a fully satisfactory manner, providing a compact solution that requires much lesser space in the course of normal operation, offers optimum stability and furthermore allows for smoother and more progressive operation.

Toward this end and more specifically, the crane proposed, being a standard crane and thus being provided with a dolly, centers its features on the fact that it uses a column or vertical beam of a length in accordance with the maximum height foreseen for the camera, onto which vertical and parallel guides are fitted to provide movement to at least two carriages, one for securing the operator's seat and camera support and the other for fitting a counterweight designed to balance the loads in either carriage.

According to another feature of the invention, said carriages are related to one another through adequate transmission means such as a strong cable which cooperates with a pulley installed at the upper end of the column, so that the ascent of one carriage involves the parallel descent of the other, and vice versa.

According to a further feature of the invention, said column, which must obviously be rotational in order to allow the camera to perform its classic panoramic sweeping motion, is attached at its lower end to a short and robust radial arm hinged to the center of the dolly, the column being substantially off-center and thus making it absolutely impossible for the crane to overturn as a result of a lack of load compensation when the operator leaves his seat, since at that moment the assembly's center of gravity, which was originally substantially on the vertical of the dolly, is now located on the vertical of the column, namely in a position of optimum stability.

According to a further feature of the invention, it is foreseen that the column is allowed to rotate on its own axis in a 180° angle, so that the arm carrying the operator and the camera is positioned either over or outside the dolly, in the latter case the camera support being allowed to tilt until the camera practically reaches floor level without interference from the dolly, the counterweight being provided with position adjustment means in regard to the column designed to maintain, in either of the column's working positions, the assembly's center of gravity over the dolly.

Concerning the driving means, both the carriage's vertical travel movement and the column's rotational movement, which is in fact a planetary movement, can be implemented manually, the camera operator being aided by an assistant so that their combined effort provides the crane with the movement required at each stage, or else the crane may be motor-driven so that its movement is directly controlled by the camera operator himself or by his assistant, e.g. through a remote control.

### DESCRIPTION OF THE DRAWINGS

To complement this description and in order to help provide a better understanding of the characteristics of the invention, a set of illustrative and non-limiting drawings is enclosed to this specification, wherein the following is displayed:

Figure 1 is a perspective view of a crane for cinema and video cameras constructed according to the object of the present invention, showing the operator's post in its lower limit position.

Figure 2 is another perspective view of the assembly shown in the previous figure, although the operators's post is now in its upper height limit position.

Figure 3 is an enlarged detail of the upper end of the column, more specifically of one of the carriages slidingly attached to the column.

Figure 4 shows the assembly displayed in the previous figure, although viewed from an angle offset approximately 90° in respect to said figure.

Figure 5, on ending, shows a detail similar to that of figure 4, although corresponding to the lower end of the column, special attention being given to the hinged joint attaching the column to the dolly.

### PREFERRED EMBODIMENT OF THE INVENTION

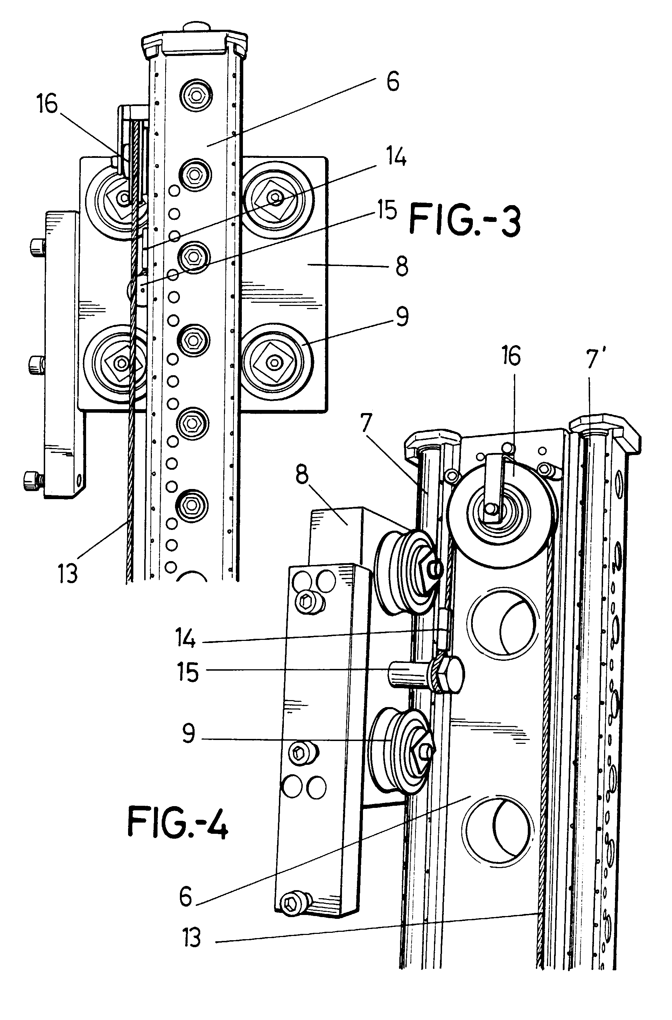

According to these figures, the proposed crane is seen to be structured on a base or dolly (1) of a standard type, which in the present case is embodied in a platform fitted with grooved wheels (2) which roll along rails (3) conveniently arranged on the floor, said dolly (1) being provided, in a center position, with a vertical bolt (4) of an appropriate strength on which is mounted, over bearings, a short transversal arm (5), the end of which, opposite bolt (4), fails to reach under any circumstance the periphery of dolly (1), said arm (5) being attached to a strong vertical column (6) of a length in accordance with the maximum height foreseen for the operator, said column (6) having two guides (7-7'), equally vertical, arranged in opposite positions, said two guides (7-7') being double guides so that each of them defines a double rolling track for a carriage (8-8'), each carriage being fitted with four grooved wheels (9) forming two opposite pairs which roll on the corresponding double tracks (7), thereby providing a perfect sliding motion and guidance to the carriage (8), as can be perceived particularly from figure 3.

Onto one of these carriages (8) is secured the camera operator's seat (10) and the camera support (11), while the other carriage (8') is integral to a counterweight (12), conveniently calculated to compensate for the weight of the seat (10), the support (11) and the operator and his camera.

The two carriages (8-8') are associated to each other through a transmission element, preferably in the form of a cable (13), both ends of which (14-14') are attached to respective bolts (15-15') in the carriages (8-8'), the cable cooperating with a pulley (16) installed at the upper end of the column (6) in order that, as previously stated, as one carriage (8) ascends, the other carriage (8') descends, and vice versa.

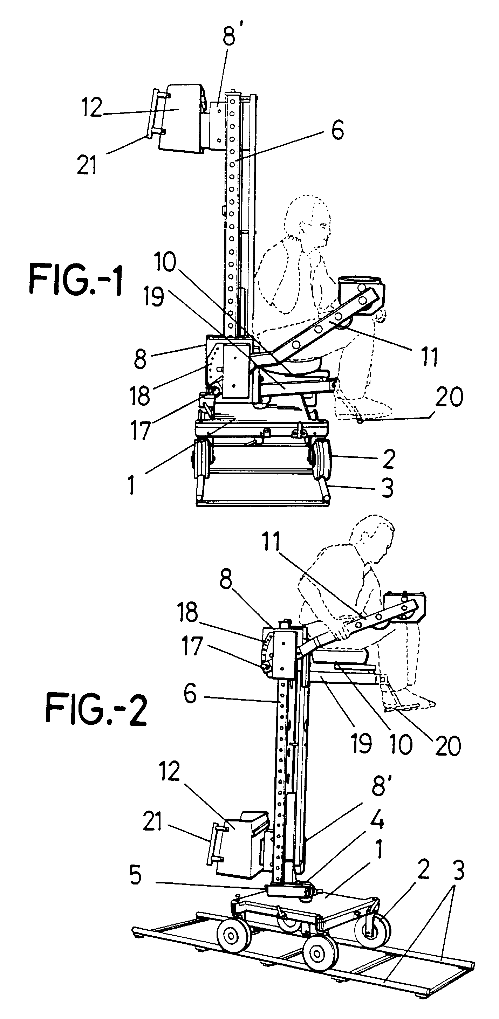

The camera support (11) is preferably position-adjustable, as can be seen particularly in figure 2, so that its arm, also assigned the reference number (11), is tiltingly mounted on the corresponding carriage (8) and is fitted beyond said hinged joint with a screw or pin (17) capable of being selectively inserted in one of the multiple holes (18) provided for that purpose in a circumference arrangement concentric with the tilting axis of arm (11), in a manner that the latter is able to adopt the maximum height position down to a limit descending tilting position, as shown in figure 2, in which said arm (11) adopts a forwardly and downwardly inclined position.

Concerning seat (10), it is mounted on a projecting arm (19) and associated to a footrest (20).

As previously stated, both the longitudinal/vertical movements and the camera operator rotational movement may be conducted manually with the help of an assistant, in which case the crane is fitted with handles such as the one shown in the figures associated to counterweight (12), under reference number (21), although these movements may equally be power-driven through adequate motors, in which case the camera operator's position can be controlled by the operator himself or by his assistant.

In any event, the crane occupies a minimum space, in view that, as can be appreciated in figures 1 and 2, the circumferential sweep is virtually the one defined by counterweight (12), entailing in the least favorable case a sweeping diameter shorter than that of conventional cranes.

Furthermore, operation in both horizontal and vertical directions is smooth and progressive, and the crane offers an optimum stability as a result of its column (6) being off center, accidental overturning being practically impossible.

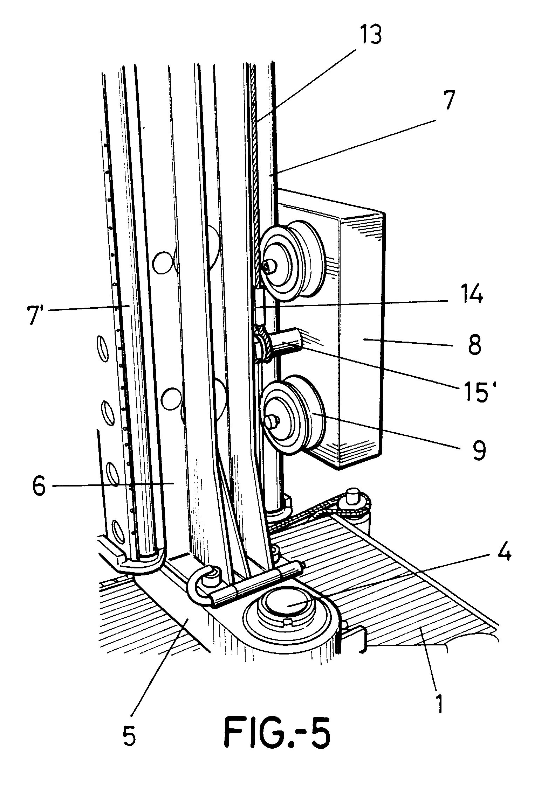

Column (6) is hinged to arm (5), as shown particularly in figure 5, in order to allow folding for transport facility purposes.

This description needs not be more extensive for any person expert on the subject to grasp the scope of the invention and the advantages deriving therefrom.

The materials, shape, size and arrangement of the elements are liable to variation provided the essential character of the invention is not altered.

The terms used in this specification must in every case be interpreted in an ample, non-limiting sense.

## Claims

1. A crane for cinema and video cameras of the type incorporating a base or platform, preferably a dolly, essentially characterized in that said dolly (1) is associated to a column (6) of a length according to the maximum height foreseen for the camera operator, in which column guides (7-7') are installed for at least two carriages (8-8'), arranged so that one of said carriages (8) is integral to the operator's seat and the camera support, while the other carriage is integral to a counterweight opposite the previous assembly, further providing that the two carriages relate to each other through a transmission element, in order that the ascending movement of one of them is simultaneous to the descending movement of the other, and vice versa.

2. A crane for cinema and video cameras according to claim 1, characterized in that each carriage (8-8') incorporates two pairs of grooved wheels (9) which respectively roll along the double track defined in the respective guide (7) in column (6), said tracks being opposite each other inside each guide, while said guides (7-7') are opposite each other in the context of the column.

3. A crane for cinema and video cameras according to claim 1, characterized in that the transmission element between the two carriages (8-8') consists of a cable (13), the ends of which (14-14') are attached to said carriages (8-8') with the cooperation of respective bolts (15-15'), said cable passing through a pulley (16) mounted on the upper end of column (6).

4. A crane for cinema and video cameras according to claim 1, characterized in that column (6), hinged to dolly (1), incorporates a short transversal arm (5) conveniently secured to the lower end thereof, the other end of said arm being attached to a bolt (4) hinged onto dolly (1) in such a manner that column (6) lies substantially off center over said dolly, performing a planetary movement around hinge joint bolt (4), thus improving the stability of the crane against forces aimed at overturning it.

5. A crane for cinema and video cameras according to claims 1 and 4, characterized in that column (6) is secured in its lower end to transversal arm (5) by means of a hinge joint allowing rotation of said column around its own axis, in a manner that the arm (19) supporting the camera operator, and particularly the camera support (11), is liable to be positioned over the dolly (1) or else to be projected outwards in a way that the dolly does not interfere with the tilting of support (11) when the camera is required to descend to floor level, the counterweights (12) being provided with an extender for adjusting their position according to the angular position of column (6) in order to permanently maintain the center of gravity of the assembly over the dolly (1).

6. A crane for cinema and video cameras according to the preceding claims, characterized in that the rotational movement of column (6) around itself and around axis (4) of dolly (1), and/or the vertical movement of carriages (8-8') and their associated elements is implemented either manually or with the help of appropriate motor-driven elements which can be remote-controlled by the camera operator himself.

7. A crane for cinema and video cameras according to the preceding claims, characterized in that column (6) is hinge-joined to arm (5) in order to allow folding during the transport stage.
